# EUROPEAN PATENT APPLICATION

(11) **EP 3 192 926 A1**
(43) Date of publication of application: **19.07.2017**
(21) Application number: 15894701.0
(22) Date of filing: 22.07.2015
(51) Int. Cl.: E01H 5/09, B60K 1/00

(54) **TWO-STEP SNOW BLOWER**

(30) Priority: 11.06.2015 CN 201510321309
(71) Applicant: Zhejiang Yat Electrical Appliance Co., Ltd., Yuxin Town, South Lake Zone Jiaxing Zhejiang 314009 (CN)
(72) Inventor: ZHANG, Jin, Jiaxing Zhejiang 314100 (CN); WANG, Dong, Jiaxing Zhejiang 314100 (CN); HE, Zhiqiang, Jiaxing Zhejiang 314100 (CN)
(74) Representative: 2s | ip Schramm Schneider Patentanwälte Rechtsanwälte
(86) International application number: PCT/CN2015/084737
(87) International publication number: WO 2016/197433

(57) **Abstract**

The invention discloses a dual-step snow sweeper, includes a body, on which a driving device, a self-propelled device, a snow sweeping device, and a handrail control device are arranged. The driving device drives the operation of the self-propelled device and the snow sweeping device, the snow sweeping device includes a snow scraping mechanism and a snow throwing mechanism, and the driving device includes at least one motor which is powered by a power supply device. The power supply device used in the invention can use battery supply separately, and can supply power by being connected with alternating current through an AC-DC power supply system as well, or operate in such a way that the AC directly drives an AC motor. Therefore, the invention is simple in structure, stable in performance, and convenient in assembly.

## Description

### TECHNICAL FIELD

The invention relates to a dual-step snow sweeper.

### BACKGROUND

The dual-step snow sweeper has the following definition: the first step of snow sweeping is to operate a snow scraper, and the second step of snow sweeping is to throw out snow by an impeller through upper and lower nozzle assemblies. All the dual-step snow sweepers in the market are powered by a general engine.

The engine snow sweeper is one of the most effective snow sweepers currently due to its strong power, high efficiency, and strong operability. However, the general engine snow sweeper has the following disadvantages: 1, it is complicated in structure, complicated in operation, heavy in whole machine, poor in man-machineefficiency, high in cost, and low in safety; and 2, the engine snow sweeper is large in noise, serious in environmental pollution, large in fuel consumption, and unfavourable in energy conservation and emission reduction.

### SUMMARY

The technical problem to be solved by the invention is to provide a dual-step snow sweeper, which is simple in structure, stable in performance, convenient in operation, low in noise, and no in environmental pollution so as to overcome the disadvantages of the engine snow sweeper in the using process.

To solve the above technical problem, the invention uses the following technical solution: a dual-stepsnow sweeper, comprising: a body, on which a driving device, a self-propelled device, a snow sweeping device, and a handrail control device are arranged, wherein the driving device drives the operation of the self-propelled device and the snow sweeping device, the snow sweeping device comprises a snow scraping mechanism and a snow throwing mechanism, and the driving device comprises at least one motor which is powered by a power supply device.

Preferably, the motor uses a single motor or doublemotors, wherein when a single motor is used, one motor drives the operation of the self-propelled device and the snow sweeping device simultaneously, while when doublemotors are used, one motor drives the operation of the self-propelled device and the other motor drives the operation of the snow sweeping device.

Preferably, the snow sweeping device comprises a snow scraping mechanism and a snow throwing mechanism. The motor uses three motors, the first one of which drives the operation of the self-propelled device, the second one of which drives the operation of the snow scraping mechanism, and the third one of which drives the operation of the snow throwing mechanism.

Preferably, when a single motor is used, the motor is a brushlessmotor, a magnetic steelmotor, or a series-excited motor, and when more than two motors are used, the brushlessmotor, the magnetic steelmotor and the series-excited motor are used simultaneously or the combination of any of the above motors is used.

Preferably, thepower supply device is a battery pack assembly or AC power supply, in which the battery pack assembly uses a single battery pack or the combination in series or in parallel of several battery packs of the same volume, the same voltage,or different volumes, different voltages.

Preferably, thepower supply device uses a hybrid power system formed by AC and DC.

Preferably, the DC power supply directly drives the operation of the motor when the whole machine is connected with the DC power supply; the AC power supply drives the operation of the motor when the whole machine is connected with the AC power supply in the state that the DC power supply is connected or not connected.

Preferably, thehandrail control device comprises a plurality of sections of handrail, and the uppermost section of handrail is connected with a control panel.

Preferably, the snow sweeping device comprises a snow throwing impeller, a snow scraper, and a snow sweeping decelerating mechanism, in which the snow throwing impeller is mounted on the input end of the snow sweeping decelerating mechanism, and the snow scraper is mounted on the output end of the snow sweeping decelerating mechanism.

Preferably, theself-propelled device comprises a self-propelled decelerating mechanism which is provided with a clutch mechanism, the handrail control device is provided with a stay wire which is connected with the clutch mechanism, and the clutch mechanism is controlled by the stay wire.

The self-propelled device and the dual-stepsnow sweeper in the invention are driven by the motor. In addition, the power supply device used in the invention can use battery supply separately, and can supply power by being connected with alternating current through an AC-DC power supply system as well, or operate in such a way that the AC directly drives an AC motor. Therefore, the invention is simple in structure, stable in performance, convenient in assembly, humanized in operating mode, clean in energy, reducing in environmental pollution, and low in noise so as to achieve the purpose of environmental protection.

### BRIEF DESCRIPTION OF THE DRAWINGS

The invention will be further described in combination with the accompanying drawings and specific embodiments:
Fig. 1 shows an overall structural diagram of the invention;
Fig. 2 shows a structural schematic diagram of the self-propelled device (being driven by a single motor);
Fig. 3 shows a structural schematic diagram of the wheels;
Fig. 4 shows a structural schematic diagram of the dual-stepsnow sweeping device (being driven by a single motor);
Fig. 5 shows a structural schematic diagram of the motor and the planetary gearbox;
Fig. 6 shows a structural schematic diagram of the dual-stepsnow sweeper (being driven by double motors);
Fig. 7 shows a structural schematic diagram of the self-propelled device (being driven by double motors);
Fig. 8 shows an electrical control schematic diagram of using the battery pack assembly as the power supply device; and
Fig. 9 shows an electrical control schematic diagram of using the battery pack assembly as the power supply device.

### DETAILED DESCRIPTION

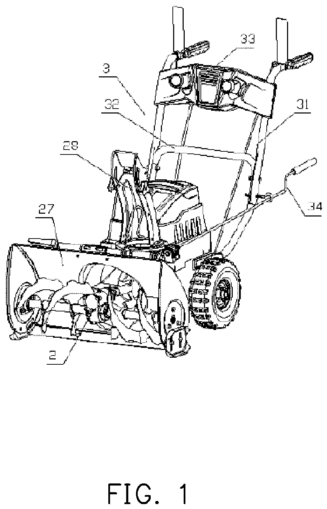

As shown in Figs. 1 to 9, adual-stepsnow sweepercomprises: a body, on which a driving device, a self-propelled device, a snow sweeping device 2, and a handrail control device 3 are arranged, wherein the driving device drives the operation of the self-propelled device and the snow sweeping device 2, and the driving device comprises at least one motor which is powered by a power supply device.

The snow sweeping device comprises a snow throwing impeller, a snow scraper, and a snow sweeping decelerating mechanism, in which the snow throwing impeller is mounted on the input end of the snow sweeping decelerating mechanism, and the snow scraper is mounted on the output end of the snow sweeping decelerating mechanism. The self-propelled device comprises a self-propelled decelerating mechanism which is provided with a clutch mechanism. The handrail control device comprises an upper handrail 31 and a lower handrail 32. The handrail control device is provided with a stay wire which is connected with the clutch mechanism, and the clutch mechanism is controlled by the stay wire. The upper handrail 31 is connected with a control panel 33. The control panel is provided with a gear selecting module and a power supply control module so that the user achieves the control selection of the forward and backward functions of the whole machine. The control panel is provided with a self-propelled motor control module for controlling the multistage speed rotation and direction change of the self-propelled motor as well.

The motor uses a single motor or doublemotors. When a single motor is used, one motor drives the operation of the self-propelled device and the snow sweeping device simultaneously, while when doublemotors are used, one motor drives the operation of the self-propelled device and the other motor drives the operation of the snow sweeping device.

In addition, the motor is not limited to the use of one or two motors described above. The motor can use a plurality of motors as well. For example, since the snow sweeping device comprises a snow scraping mechanism and a snow throwing mechanism, the motor can use three motors, the first one of which drives the operation of the self-propelled device, the second one of which drives the operation of the snow scraping mechanism, and the third one of which drives the operation of the snow throwing mechanism.

The use of a single motor for driving has the following advantages: it can save motor cost, but will also make the structure of the drive system complicated, while the use of doublemotors or a plurality of motors has the following advantages: each system can be controlled separately so as to simply the structure of the drive system.

When a single motor is used, the motor is a brushlessmotor, a magnetic steelmotor, or a series-excited motor, and when more than two motors are used, the brushlessmotor, the magnetic steelmotor and the series-excited motor are used simultaneously or the combination of any of the above motors is used.

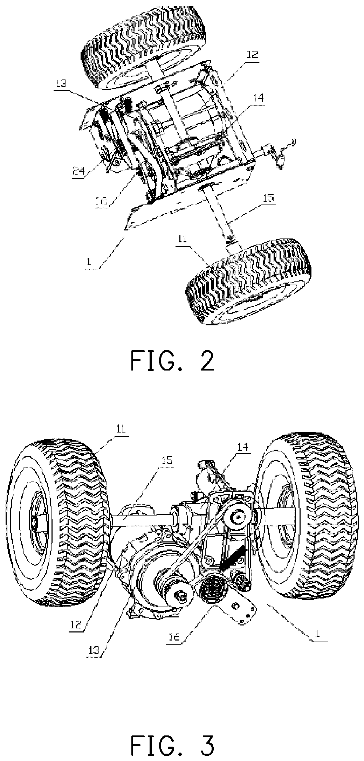

As shown in Figs. 2 to 5, thedual-stepsnow sweeper driven by a single motor comprises a drive mechanism 1 which is connected with a self-propelled device and a dual-step snow sweeping device 2. The self-propelled device and the dual-step snow sweeping device use the same motor 12 as the driving source.

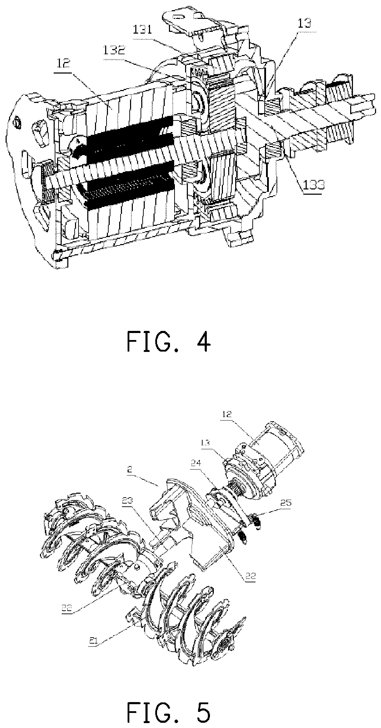

As shown in Fig. 4, the output end of the motor 12 is connected with a planetary gearbox 13 which is provided with a gear ring 131 and a planetary gear 132 therein. The output shaft of the motor drives the planetary gear to rotate as a sun gear. The planetary gear drives the output shaft 133 of the planetary gearbox to rotate within the gear ring.

As shown in Figs. 2 and 3, the self-propelled device comprises wheels 11 provided on both sides of the drive mechanism, and a drive shaft 15 and a self-propelledreduction gearbox 14 provided within the drive mechanism. The motor 12 transmits the power through the self-propelledreduction gearbox 14 and the drive shaft 15 so as to drive the wheels 11. The self-propelledreduction gearbox is provided with a self-propelledworm and gear mechanism therein. The planetary gearbox and the self-propelledreduction gearbox are driven by a self-propelledbelt mechanism therebetween. The self-propelledbelt mechanism comprises a self-propelleddriving pulley arranged on the output shaft of the planetary gearbox. One end of the self-propelledworm in the self-propelledworm and gear mechanism is provided with a self-propelleddriven pulley. A self-propelled belt is provided between the self-propelleddriving pulley and the self-propelleddriven pulley. The self-propelled worm gear in the self-propelledwormand gear mechanism drives the drive shaft to rotate. The self-propelledbelt mechanism is provided with a self-propelledtensioning pulley 16 which is connected with a self-propelledtensioningstay wire. The handrail is provided with a self-propelledtensioning control handle connected with the self-propelledtensioningstay wire.

After being output by the motor, it is output by the planetary gearbox after deceleration. The rotating speed slows down and the self-propelledtorque increases. It is connected to the self-propelledwormand gear mechanism by the self-propelledbelt mechanism in a decelerating way. The self-propelledworm drives the self-propelledwormgear to achieve deceleration and increase the torque, and drives the drive shaft and the wheels to achieve self-propel. Since the self-propelledwormand gear mechanism does not have the self-locking function of the wormand gear, the mechanism can control the self-propelledtensioning pulley to tension the self-propelled belt through the self-propelledtensioning control handle connected to the self-propelledtensioningstay wire on the handrail so that the self-propelledworm gear drives the drive shaft and the wheels to rotate.

As shown in Fig. 5, the dual-step snow sweeping device 2 comprises a snow scraping cover 27 and a snow outlet 28 communicated with the snow scraping cover. A snow scraper 21 is provided within the snow scraping cover. An impeller 22 is provided between the scraping cover and the snow outlet for feeding snow within the snow scraping cover into the snow outlet. The snow scraper is mounted on a snow scraping support shaft. The impeller is mounted on a worm 23, one end of which drives the snow scraping support shaft through a snow sweeping worm gear. The planetary gearbox 13 and the worm 23 are driven by a snow sweeping belt mechanism 24 therebetween. The snow sweeping belt mechanism comprises a snow sweeping driving pulley arranged on the output shaft of the planetary gearbox. The other end of the worm is connected with a snow sweeping driven pulley. Asnow sweeping belt is provided between the snow sweeping driving pulley and the snow sweeping driven pulley. The snow sweeping belt mechanism is provided with asnow sweeping tensioning pulley 25 which is connected with a snow sweeping tensioningstay wire. The handrail is provided with a snow sweeping tensioning control handle connected with the snow sweeping tensioningstay wire.

The motor drives the worm to rotate through the snow sweeping belt mechanism, and then the worm drives the snow sweeping worm gear to operate. The snow sweeping worm gear drives the snow scraper to start operation through the snow scraping support shaft. The first step is to sweep snow as the operation of the snow scraper, and the second step is to throw out snow, that is to say, the impeller starts to throw out snow through the snow outlet after snow enters the snow scraping cover, so as to achieve the purpose of dual-stepsnow sweeping.

The above self-propelled device and the dual-step snow sweeping device are driven by the same motor. The single motor drives the operation of the dual-step snow sweeping device and the self-propelled device simultaneously through double pulleys and double belts after passing through the planetary gearbox.

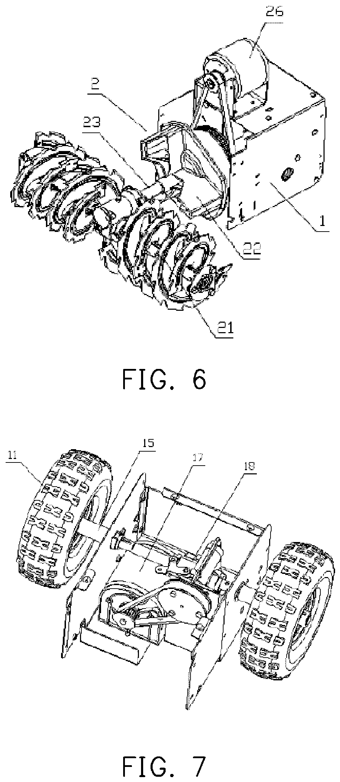

As shown in Figs. 6 and 7, the dual-stepsnow sweeper driven by double motors comprises a drive mechanism 1 which is connected with a self-propelled device and a dual-step snow sweeping device 2. The self-propelled device comprises wheels 11 provided on both sides of the drive mechanism. The dual-step snow sweeping device 2 comprises a snow scraping cover and a snow outlet communicated with the snow scraping cover. A snow scraper 21 is provided within the snow scraping cover.

As shown in Fig. 7, the self-propelled device comprises a self-propelled motor 17 mounted within the drive mechanism and a self-propelled drive structure 18 connected with the drive shaft 15 as well. The output shaft of the self-propelled motor is connected with the input shaft of the self-propelled drive structure 18 via a belt. The self-propelled drive structure 18 drives the drive shaft to rotate after the deceleration and the direction change via a gear pair. The drive shaft drives the wheels to rotate so as to be self-propelled.

In addition, as another structure of the self-propelled device, a planetary gear assembly can be mounted inside the wheels. The wheels are driven to rotate by the planetary gear assembly. The self-propelled motor is a double-output shaft motor. The planetary gear assembly comprises a gear ring and a planetary gear engaged on the internal circumference side of the gear ring. After being output by theself-propelled motor, the output rotating speed after the deceleration by the planetary gear assembly slows down and the self-propelledtorque increases.The motor output shaft on both sides of theself-propelled motor drives the planetary gear to rotate as a sun gear. The planetary gear rotates within the gear ring. The wheels are driven to rotate by the output shaft of the planetary gear so as to be self-propelled.

As shown in Fig. 6, the dual-step snow sweeping device 2 comprises an impeller 22 provided between the scraping cover and the snow outlet for feeding snow within the snow scraping cover into the snow outlet. The snow scraper and the impeller are driven by a snow sweeping motor 26. The snow scraper is mounted on a snow scraping support shaft. The impeller is mounted on a worm 23, one end of which drives the snow scraping support shaft through a worm gear, while the other end of which is connected with a driven pulley. The output shaft of the snow sweeping motor is used as the output shaft of the driving pulley. A belt is provided between the driving pulley and the driven pulley. The snow sweeping motor drives the worm to rotate through the belt, and plays a role of reducing the output rotating speed of the snow sweeping motor after the deceleration by the belt so as to increase the torque. And then the worm drives the worm gear to operate. The worm gear drives the snow scraper to start operation through the snow scraping support shaft. The first step is to sweep snow as the operation of the snow scraper, and the second step is to throw out snow, that is to say, the impeller starts to throw out snow through the snow outlet after snow enters the snow scraping cover, so as to achieve the purpose of dual-stepsnow sweeping.

In addition, the bottom of the snow outlet 28 is fixed on the rotating gear ring which is engaged with the control gear. The driving handle 34 mounted on the handrail controls the control gear to rotate. The direction of the snow sweeping outlet can be controlled conveniently so as to control the direction of snow throwing.

The snow sweeping motor and the self-propelled motor described above are powered by power supply. The self-propelled motor and the snow sweeping motor share the same power supply. Each of the self-propelled motor and the snow sweeping motor separately drives the self-propelleddevice and thedual-stepsnow sweeping device to operate. No matter it is driven by a motor or double motors or a plurality of motors, the same power supply device is used. The power supply device is a battery pack assembly or AC power supply. The AC power supply converts AC into DC which is the same as the voltage of the battery pack via a rectifier or a transformer. Of course, the power supply device can use a hybrid power system formed by AC and DC as well.

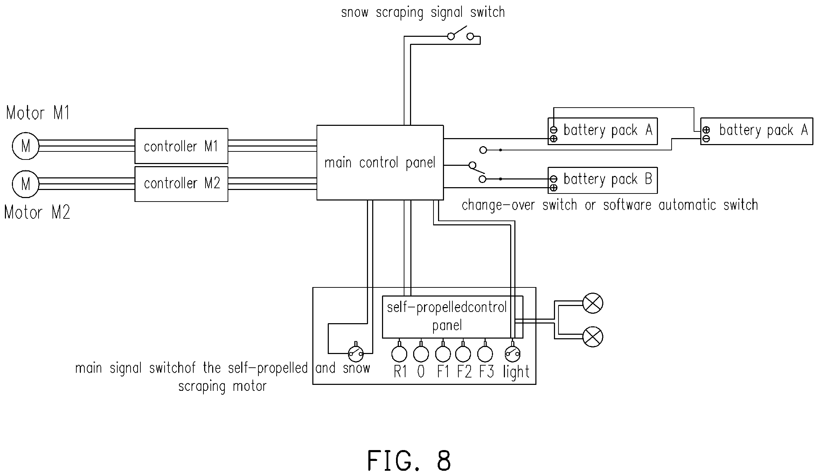

As shown in Fig. 8, when thepower supply device is a battery pack assembly, the battery pack assembly uses a single battery pack or the combination in series or in parallel of several battery packs of the same volume, the same voltage,or different volumes, different voltages. Various battery packs are selected unidirectionally to supply power through a mechanical device or a software device so as to satisfy the choice of a plurality of sets of battery packs for users and improve the operational capability of the whole machine.

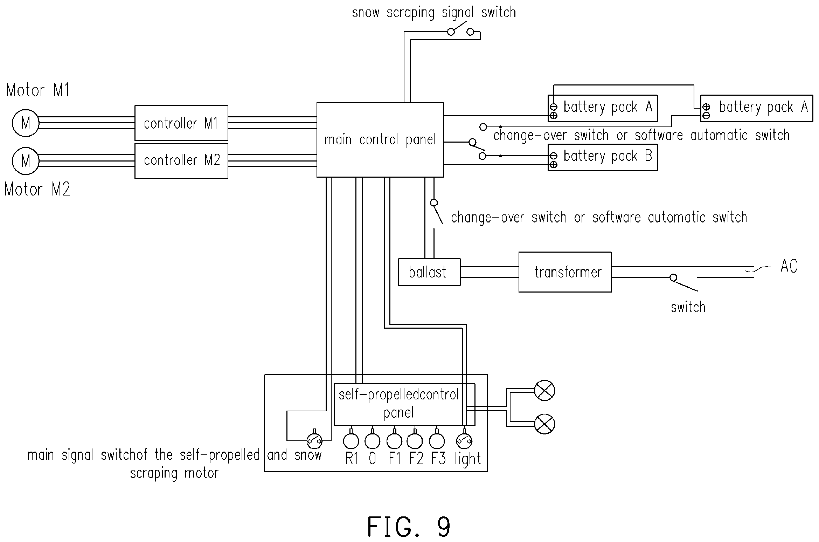

As shown in Fig. 9, when the power supply device uses the hybrid power system formed by AC and DC, AC and DC can be mutually converted for use so as to be suitable for different working environments and provide more choices for users. When the whole machine is inserted into the DC power supply, it can drive the system to operate directly; when taking out or not taking out the DC power supply drive system, it can drive the system to operate directly when being inserted into the AC power supply; when the DC power supply drive system operates, it can immediately change from the AC drive system into the DC drive system to operate when being inserted into the AC power supply.

## Claims

1. A dual-stepsnow sweeper, comprising: a body, on which a driving device, a self-propelled device, a snow sweeping device, and a handrail control device are arranged, wherein the driving device drives the operation of the self-propelled device and the snow sweeping device, and the snow sweeping device comprises a snow scraping mechanism and a snow throwing mechanism, wherein the driving device comprises at least one motor which is powered by a power supply device.

2. The dual-stepsnow sweeper according to claim 1, wherein the motor uses a single motor or doublemotors, wherein when a single motor is used, one motor drives the operation of the self-propelled device and the snow sweeping device simultaneously, while when doublemotors are used, one motor drives the operation of the self-propelled device and the other motor drives the operation of the snow sweeping device.

3. The dual-stepsnow sweeper according to claim 1, wherein the motor uses three motors, the first one of which drives the operation of the self-propelled device, the second one of which drives the operation of the snow scraping mechanism, and the third one of which drives the operation of the snow throwing mechanism.

4. The dual-stepsnow sweeper according to claim 2 or 3, wherein when a single motor is used, the motor is a brushlessmotor, a magnetic steelmotor, or a series-excited motor, and when more than two motors are used, the brushlessmotor, the magnetic steelmotor and the series-excited motor are used simultaneously or the combination of any of the above motors is used.

5. The dual-stepsnow sweeper according to claim 1, wherein the power supply device is a battery pack assembly or AC power supply, in which the battery pack assembly uses a single battery pack or the combination in series or in parallel of several battery packs of the same volume, the same voltage,or different volumes, different voltages.

6. The dual-stepsnow sweeper according to claim 1, wherein the power supply device uses a hybrid power system formed by AC and DC.

7. The dual-stepsnow sweeper according to claim 6, wherein the DC power supply directly drives the operation of the motor when the whole machine is connected with the DC power supply; the AC power supply drives the operation of the motor when the whole machine is connected with the AC power supply in the state that the DC power supply is connected or not connected.

8. The dual-stepsnow sweeper according to claim 1, wherein the handrail control device comprises a plurality of sections of handrail, and the uppermost section of handrail is connected with a control panel.

9. The dual-stepsnow sweeper according to claim 1, wherein the snow sweeping device comprises a snow throwing impeller, a snow scraper, and a snow sweeping decelerating mechanism, in which the snow throwing impeller is mounted on the input end of the snow sweeping decelerating mechanism, and the snow scraper is mounted on the output end of the snow sweeping decelerating mechanism.

10. The dual-stepsnow sweeper according to claim 1, wherein the self-propelled device comprises a self-propelled decelerating mechanism which is provided with a clutch mechanism, the handrail control device is provided with a stay wire which is connected with the clutch mechanism, and the clutch mechanism is controlled by the stay wire.
